# EUROPEAN PATENT APPLICATION

(11) **EP 1 734 730 A1**
(43) Date of publication of application: **20.12.2006**
(21) Application number: 06007043.0
(22) Date of filing: 03.04.2006
(51) Int. Cl.: H04M 1/725, H04M 1/247

(54) **Device and method for displaying files during bluetooth communication in a wireless terminal**

(30) Priority: 06.04.2005 KR 20050028431
(71) Applicant: Samsung Electronics Co., Ltd., Suwon-si, Gyeonggi-Do (KR)
(72) Inventor: Park, Seung-Kwon, Yeongtong-gu, Suwon-si, Gyeonggi-do (KR); Suk, Ji-Won, Yeongtong-gu, Suwon-si, Gyeonggi-do (KR); Choi, Seung-Chul, Yeongtong-gu, Suwon-si, Gyeonggi-do (KR)
(74) Representative: Lang, Johannes

(57) **Abstract**

A device and method for displaying files during Bluetooth communication in a wireless terminal is provided. The device comprises a controller for controlling and transmitting only a shared file upon request for file transmission, and a Bluetooth module for transmitting the shared file. The method comprises determining whether a wireless terminal is set to share for Bluetooth communication upon receipt of a file request. When the determination comprises an indication that the terminal is set to share for Bluetooth, transmitting only at least one shared file from the wireless terminal to the called wireless terminal. When the determination comprises an indication that the wireless terminal is not set to share for Bluetooth, transmitting files from the wireless terminal to the called wireless terminal. The method further comprises displaying at least one of the transmitted files in the called wireless terminal.

## Description

### BACKGROUND OF THE INVENTION

### Field of the Invention:

The present invention relates generally to a device and method for displaying files during Bluetooth communication in a wireless terminal. More particularly, the present invention relates to a device and method for transmitting and displaying only shared files during Bluetooth communication.

### Description of the Related Art:

Bluetooth is a wireless interface specification for wireless connection between portable devices such as a wireless phone, portable personal computer, network access points, and other peripheral devices. Devises employing Bluetooth are characterized by small size, low price, and low consumption of power. Bluetooth is a telecommunication technology for connecting equipment located, in general, as far apart as ten meters (up to 100 meters maximum) and beyond an obstacle. Bluetooth has a data transfer rate of 433.9 Kbps in a symmetric communication mode, and has a data transfer rate of 723.2 Kbps in an asymmetric communication mode. In voice transfer, a 64 Kbps synchronous transfer rate is used, and up to three voice channels can be used. Further, a 10 Mbps-class technology capable of transferring moving pictures is under development.

Wireless terminals employing a Bluetooth module can transfer and receive files using the Bluetooth communication protocol. However, there is a drawback in that when files are transferred or received between wireless terminals using Bluetooth, the files of the wireless terminal are all public to a user of a called wireless terminal, and can be deleted and edited by the user of the called wireless terminal.

### SUMMARY OF THE INVENTION

Accordingly, it is an object of the present invention to provide a method and device for transmitting and displaying only files identified as shared files during Bluetooth communication in a wireless terminal.

To achieve the above and other objects, according to exemplary embodiments of the present invention, a device for transmitting files during Bluetooth communication in a wireless terminal is provided. The device comprises a controller for controlling and transmitting only a file identified as a shared file upon request for file transmission, and a Bluetooth module for transmitting the shared file.

In another exemplary aspect of the present invention, there is provided a method for transmitting files during Bluetooth communication in a wireless terminal. In an exemplary embodiment, the method comprises receiving a file request from a called wireless terminal when a Bluetooth communication is connected. Upon receipt of the file request, transmitting only at least one file identified as a shared file from the wireless terminal to the called wireless terminal, and displaying the at least one transmitted file in the called wireless terminal.

In a further exemplary aspect of the present invention, there is provided a method for displaying files during Bluetooth communication in a wireless terminal. In an exemplary embodiment, the method comprises receiving a file request from a called wireless terminal when a Bluetooth communication is connected. The method further comprises, upon receipt of the file request, determining whether the wireless terminal is set to share for Bluetooth communication. When the determination comprises an indication that the terminal is set to share for Bluetooth, transmitting only at least one file identified as a shared file from the wireless terminal to the called wireless terminal. When the determination comprises an indication that the wireless terminal is not set to share for Bluetooth, transmitting files from the wireless terminal to the called wireless terminal. The method further comprises displaying at least one of the transmitted files in the called wireless terminal.

### BRIEF DESCRIPTION OF THE DRAWINGS

The above and other objects, exemplary features, and advantages of the present invention will become more apparent from the following detailed description of certain exemplary embodiments thereof when taken in conjunction with the accompanying drawings, in which:
FIG. 1 illustrates a construction of a wireless terminal according to an exemplary embodiment of the present invention;
FIG. 2 is a flowchart illustrating a process of setting to share files for Bluetooth communication in a wireless terminal according to an exemplary embodiment of the present invention;
FIG. 3 is a flowchart illustrating a process of displaying only a shared file during Bluetooth communication in a wireless terminal according to an exemplary embodiment of the present invention; and
FIG. 4 is a diagram for describing the exemplary embodiments illustrated in FIGS. 2 and 3. Throughout the drawings, like reference numbers should be understood to refer to like elements, features, and structures.

### DETAILED DESCRIPTION OF EXEMPLARY EMBODIMENTS

The matters exemplified in this description are provided to assist in a comprehensive understanding of various exemplary embodiments of the present invention disclosed with reference to the accompanying figures. Accordingly, those of ordinary skill in the art will recognize that various changes and modifications of the exemplary embodiments described herein can be made without departing from the scope and spirit of the claimed invention. Descriptions of well-known functions and constructions are omitted for clarity and conciseness.

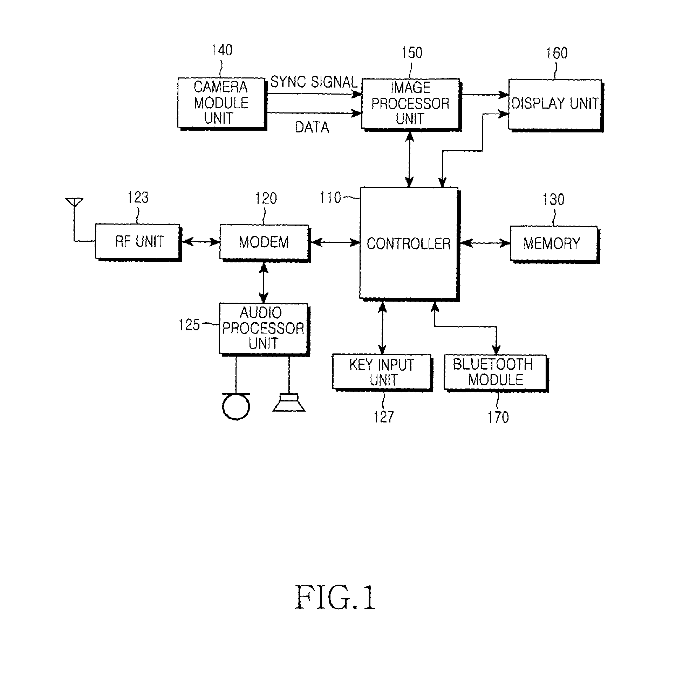

FIG. 1 illustrates a construction of a wireless terminal comprising a camera according to an exemplary embodiment of the present invention.

Referring to FIG. 1, a radio frequency (RF) unit 123 performs wireless communication of the wireless terminal. The RF unit 123 comprises an RF transmitter for up-converting a frequency of a transmission signal and amplifying the transmission signal. The RF unit 123 also comprises an RF receiver for low-noise amplification of a reception signal and downconverting a frequency of the reception signal. A modulator/demodulator (MODEM) 120 comprises a transmitter for encoding and modulating the transmission signal, and a receiver for demodulating and decoding the reception signal. An audio processor unit 125 can comprise a COder/DECoder (CODEC). The codec comprises a data codec for processing packet data, and an audio codec for processing an audio signal such as voice. The audio processor unit 125 receives a digital audio signal from the modem 120, converts the received digital audio signal into an analog audio signal through the audio codec, and reproduces the analog audio signal. Alternatively, the audio processor unit 125 receives an analog audio signal generated from a microphone, converts the received analog audio signal into a digital audio signal through the audio codec, and transmits the digital audio signal to the modem 120. The codec can be provided separately, included in the audio processor unit 125, or included in a controller 110.

A memory 130 comprises program memory and data memory. The program memory can store programs for controlling general operation of the wireless terminal, and programs for controlling transmission and display of shared files during Bluetooth communication according to an exemplary embodiment of the present invention. The data memory temporarily stores data generated in execution of the programs.

The controller 110 controls the general operation of the wireless terminal. The controller 110 can also comprise the modem 120 and codec. Further, the controller 110 can set selected files of the wireless terminal as shared files for Bluetooth communication according to an exemplary embodiment of the present invention. Furthermore, upon receipt of a file request from a called wireless terminal, the controller 110 can transmit and display only the shared files. Additionally, upon the called wireless terminal's receipt of the shared files according to the file request during Bluetooth communication, the controller 110 can delete and put the shared files or transmit and receive a file of the wireless terminal for the called wireless terminal.

A Bluetooth module 170 receives files from the called wireless terminal, or transmits files of the wireless terminal to the called wireless terminal, through a wireless communication with a Bluetooth module included in the called wireless terminal.

A camera module unit 140 comprises a camera sensor for photographing image data and converting a photographed light signal into an electric signal, and a signal processor for converting an analog image signal photographed in the camera sensor into digital data. The camera sensor can be a charge-coupled device (CCD) sensor, and the signal processor can be embodied as a digital signal processor (DSP). The camera sensor and the signal processor can be embodied in an integral-type unit or in separate components.

An image processor unit 150 generates screen data for displaying the image signal output from the camera module unit 140. The image processor unit 150 receives the image signal from the camera module unit 140, processes the received image signal on a per-frame basis, and outputs frame image data adaptively to a characteristic and size of a display unit 160. The image processor unit 150 comprises an image codec which compresses the frame image data displayed on the display unit 160 or restores the compressed frame image data into original frame image data. The image codec can be at least one of a joint photographic experts group (JPEG) codec, a motion picture experts group-4 (MPEG4) codec, and a Wavelet codec. The image processor unit 150 comprises a function of an on screen display (OSD), and can output OSD data depending on the size of a screen displayed under the control of the controller 110.

The display unit 160 receives the image signal from the image processor unit 150 and displays the received image signal on the screen, and receives user data from the controller 110 and displays the received user data on the screen. The display unit 160 can employ a liquid crystal display (LCD). Display unit 160 can comprise an LCD controller, a memory for storing the image data, and an LCD element. When the LCD is embodied in a touch screen display, the LCD can be also operated as an input unit. Further, the display unit 160 can display the shared files received from the called wireless terminal during Bluetooth communications.

A key input unit 127 comprises input keys for inputting numeral and character information, and function keys for setting functions.

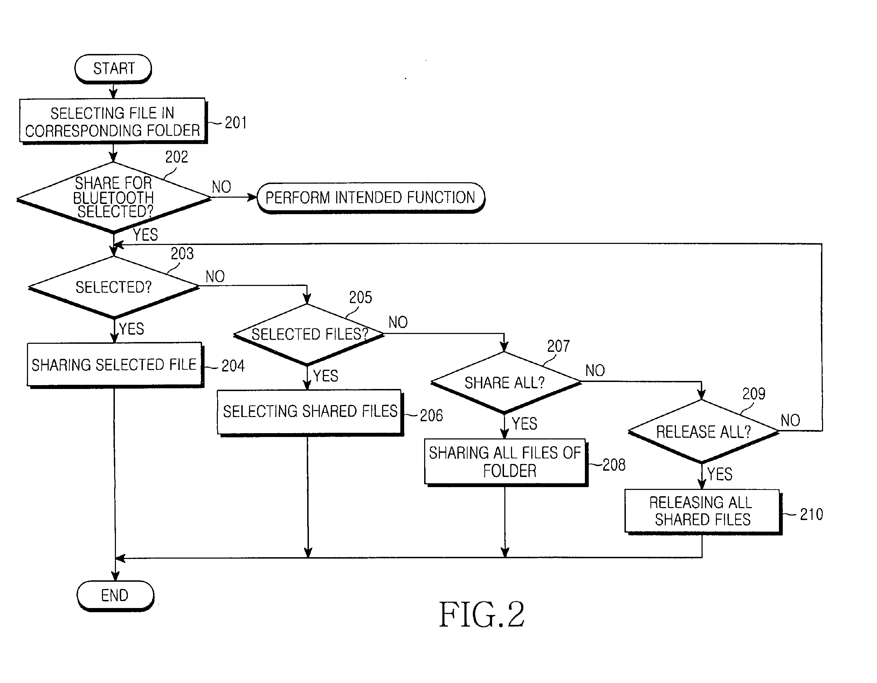

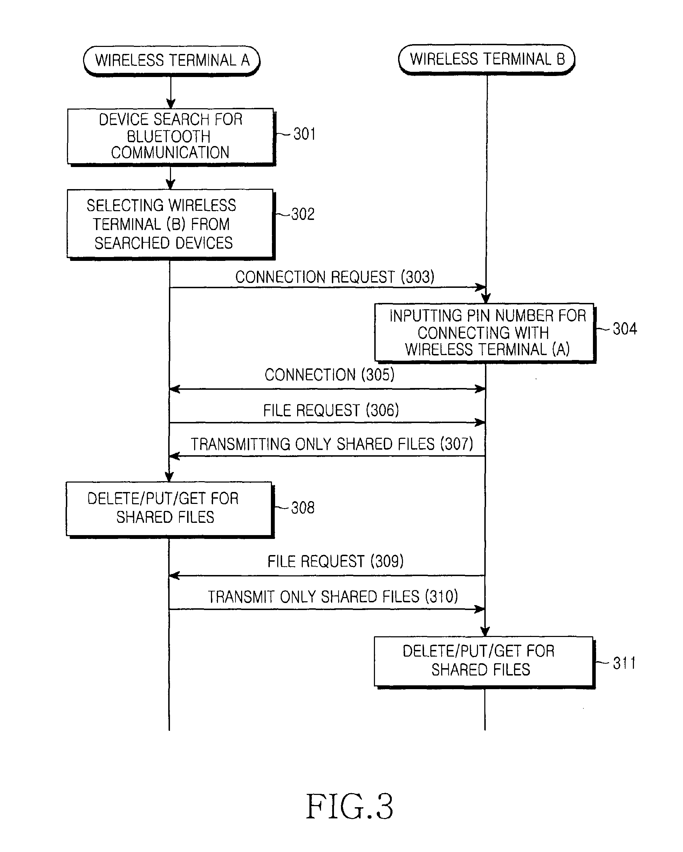

A procedure of transmitting and displaying only the shared file during Bluetooth communication in the wireless terminal will be described with reference to the exemplary embodiments illustrated in FIGS. 2 and 3.

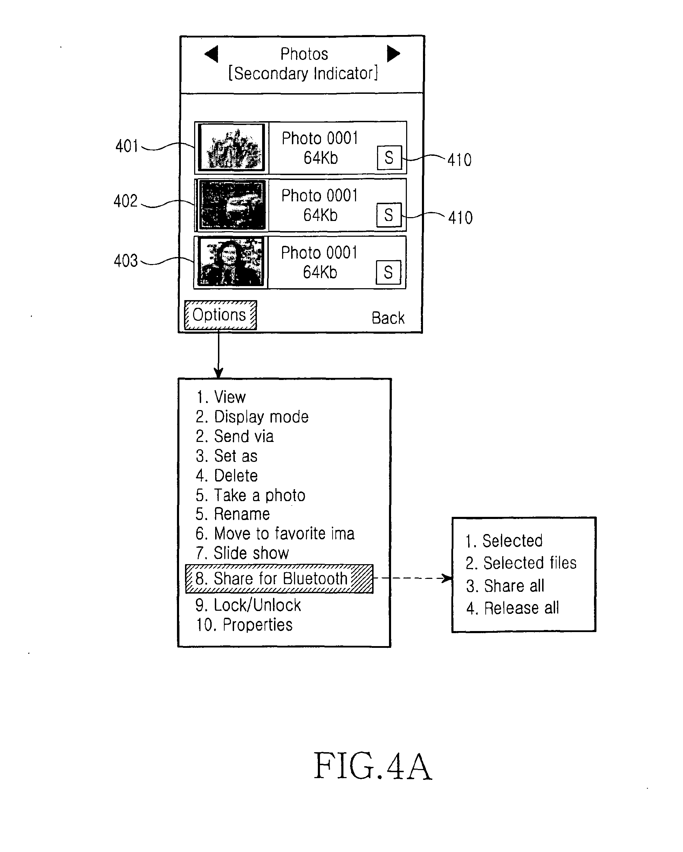

FIG. 2 is a flowchart illustrating a process of setting to share the files for the Bluetooth communication in the wireless terminal according to an exemplary embodiment of the present invention, and FIG. 4A is a diagram for describing the exemplary process of FIG. 2.

Hereinafter, an exemplary embodiment of the present invention will be in detail described with reference to FIGS. 1 to 4.

Referring to FIG. 2, if a corresponding folder is selected from folders of the wireless terminal, the controller 110 detects the selection of the corresponding folder, and displays menus of files stored in the selected corresponding folder. If a user of the wireless terminal positions a cursor on one of the displayed files and selects "Share for Bluetooth" in Step 201, in Step,202, the controller 110 detects the selection of the "Share for Bluetooth" and displays a menu of the "Share for Bluetooth".

If "Selected" is chosen from the menu of "Share for Bluetooth," the controller 110 detects the selection of "Selected" in Step 203, and sets the file on which the cursor is positioned in Step 204 as the shared file. Alternatively, if "Selected files" is selected from the menu of "Share for Bluetooth," the controller 110 detects the selection of the "Selected files" and displays the files of the corresponding folder in Step 205. The controller 110 then allows the user to select at least one file intended to be shared from the displayed files and sets the selected file as the shared file in Step 206.

Alternatively, if "Share all" is selected from the menu of "Share for Bluetooth," the controller 110 detects the selection of the "Share all" in step 207 and sets as the shared files all files of the corresponding folder in Step 208. Alternatively, if "Release all" is selected from the menu of the "Share for Bluetooth," the controller 110 detects the selection of the "Release all" in Step 209 and releases all shared files of the corresponding folder in Step 210.

If files are shared through the Steps 204, 206, and 208, the shared files display icons are displayed for informing that the files are shared files.

An operation of the exemplary process illustrated in FIG. 2 will be described with reference to FIG. 4A. If the user selects a photo folder from the folders of the wireless terminal, the controller 110 detects the selection of the photo folder and displays photo files stored in the photo folder. At this time, the "Share for Bluetooth" is selected through "option," and the menu of the "Share for Bluetooth" is displayed. The shared files are set through the menu of the "Share for Bluetooth." One possible choice comprises the "Selected" option, whereby only the file on which the cursor is positioned is shared Another possible choice comprises the "Selected files" option, whereby at least one of the photo files of the photo folder is selected and shared Yet another possible choice comprises the "Share all" option, whereby all photo files of the photo folder are shared. The shared files are released through the "Release all" menu option of the "Share for Bluetooth" menu display.

If a first photo file 401 and a second photo file 402 of the photo files of the photo folder are set as shared files through the "Share for Bluetooth" menu, the first and second photo files 401 and 402 display status icons 410 for indicating status as shared files.

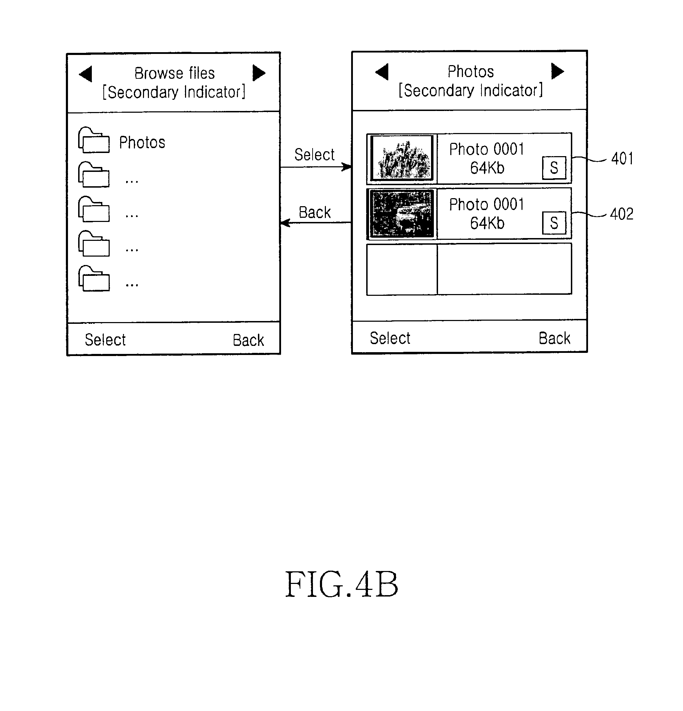

FIG. 3 is a flowchart illustrating a process of displaying only the shared file during Bluetooth communication in the wireless terminal according to an exemplary embodiment of the present invention. FIG. 4B is a diagram for describing the exemplary process of FIG 3. In an exemplary embodiment of the present invention, a process of Bluetooth communication between a wireless terminal (A) and a wireless terminal (B) constructed as in FIG. 1 is illustrated.

Hereinafter, the exemplary embodiment of the present invention will be described in detail with reference to FIG. 3.

Referring to FIG. 3, if wireless terminal (A) selects a device search in Step 301 so as to perfonn Bluetooth communication, the controller 110 detects the selection of the device search and searches for and displays devices capable of currently performing Bluetooth communication. If the user selects wireless terminal (B) from the displayed devices in Step 302, the controller 110 detects the selection of wireless terminal (B) and, in Step 303 requests wireless terminal (B) for communication connection through the Bluetooth module 170. In wireless terminal (B), upon receiving a request for a communication connection from wireless terminal (A), a pin number is inputted in Step 304 to accept the Bluetooth communication connection with wireless terminal (A). Through the acceptance, wireless terminal (A) and wireless terminal (B) connect for Bluetooth communication in Step 305.

After Bluetooth communication is connected between wireless terminal (A) and wireless terminal (B), if wireless terminal (A) requests wireless terminal (B) for a file in Step 306, wireless terminal (B) set to share for Bluetooth transmits only shared files to the wireless terminal (A) in Step 307. However, if wireless terminal (B) is not set to share for Bluetooth, wireless terminal (B) transmits and displays all files of wireless terminal (B) to wireless terminal (A), and all files of wireless terminal (B) is displayed in wireless terminal (A). According to the file request of wireless terminal (A), the lowermost folders of wireless terminal (B) are displayed on a display unit of wireless terminal (A). When a corresponding folder is selected from the displayed lowermost folders, only the shared files of the selected folder are displayed.

If the shared files of the selected folder are displayed on the display unit of wireless terminal (A), in Step 308 the user of wireless terminal (A) can delete or put the shared file of wireless terminal (B) or get a file from wireless terminal (A) for wireless terminal (B).

FIG. 4B illustrates a state where if the photo folder is selected from the lowermost folders of wireless terminal (B) and displayed according to the file request of wireless terminal (A), the first and second photo files 401 and 402 set as shared files through FIG. 4A in wireless terminal (B) are displayed on the display unit of wireless terminal (A).

Alternatively, if wireless terminal (B) requests a file from wireless terminal (A) in Step 309, wireless terminal (A) transmits only shared files to wireless terminal (B) in Step 310. According to the file request of wireless terminal (B), the lowermost folders of wireless terminal (A) are displayed on a display unit of wireless terminal (B). When a corresponding folder is selected from the lowermost folders displayed, only the shared files of the selected folder are displayed.

If the shared files of the selected folder are displayed on the display unit of wireless terminal (B), in Step 311 the user of wireless terminal (B) can delete or put the shared file of wireless terminal (A) or get a file from wireless terminal (B) for wireless terminal (A).

Accordingly, the present invention provides only the shared file in Bluetooth communication of a wireless terminal, thereby providing a user of the wireless terminal the ability to selectively transmit and display only his/her desiring file to the called wireless terminal during Bluetooth communications.

While the present invention has been particularly shown and described with reference to certain exemplary embodiments thereof, it will be understood by those of ordinary skill in the art that various changes in form and detail may be made therein without departing from the spirit and scope of the invention as defined by the appended claims and equivalents thereof.

## Claims

1. A device for transmitting files during Bluetooth communication in a wireless terminal, the device comprising:
a controller for controlling and transmitting only a file identified as a shared file upon request for file transmission; and
a Bluetooth module for transmitting the shared file.

2. The device of claim 1, wherein the controller is configured to control and set at least one file identified as a shared file, control and display a shared file received in response to a file request, and control and perform a control operation for the received shared file.

3. The device of claim 2, wherein the controller is further configured to control and display an icon comprising an indication of the at least one file being a shared file.

4. The device of claim 2, wherein the controller is further configured to control and perform a control operation comprising at least one of deleting, downloading, and adding the received shared file.

5. The device of claim 1, wherein the Bluetooth module is configured to receive the shared file in response to the file request of the wireless terminal.

6. The device of claim 1, further comprising a display unit for displaying the shared file set in the wireless terminal and the shared file received in response to the file request.

7. The device of claim 6, wherein the display unit is configured to display an icon comprising an indication of the shared file.

8. A method for transmitting files during Bluetooth communication in a wireless terminal, the method comprising:
receiving a file request from a called wireless terminal when Bluetooth communication is connected;
transmitting only at least one file identified as a shared file from the wireless terminal to the called wireless terminal upon receipt of the file request; and
displaying the at least one transmitted file in the called wireless terminal.

9. The method of claim 8, further comprising:
requesting the called wireless terminal to transmit at least one file identified as a shared file;
receiving the at least one shared file from the called wireless terminal;
displaying the received shared file according to the file request; and
performing a control operation upon the shared file.

10. The method of claim 9, wherein the control operation comprises at least one of deleting, downloading, and adding the shared file.

11. A method for displaying files during Bluetooth communication in a wireless terminal, the method comprising:
receiving a file request from a called wireless terminal when Bluetooth communication is connected;
determining whether the wireless terminal is set to share for Bluetooth communication upon receipt of the file request;
when the determination comprises an indication that the terminal is set to share for Bluetooth, transmitting only at least one file identified as a shared file from the wireless terminal to the called wireless terminal
when the determination comprises an indication that the wireless terminal is not set to share for Bluetooth, transmitting files from the wireless terminal to the called wireless terminal; and
displaying at least one of the transmitted files in the called wireless terminal.

12. The method of claim 11, wherein setting the wireless terminal to share for Bluetooth communication comprises:
when a corresponding folder is selected in the wireless terminal, displaying files of the corresponding folder; and
setting the wireless terminal to share for Bluetooth communication at least one of the selected files of the corresponding folder.

13. The method of claim 12, wherein setting the wireless terminal to share files comprises:
displaying a share setting menu;
upon a first selection from the share setting menu, sharing a selected file;
upon a second selection from the share setting menu, selecting a file intended to be shared from the files of a corresponding folder, and sharing the selected file;
upon a third selection from the share setting menu, sharing all files of the corresponding folder; and
upon a fourth selection from the share setting menu, releasing all shared files of the corresponding folder.

14. The method of claim 12, further comprising:
displaying an icon comprising an indication of at least one file set as the shared file.

15. A wireless terminal configured to display files during Bluetooth communication, the terminal comprising:
a display; and
a controller for setting at least one selected file as a shared file and transmitting and displaying only the at least one shared file on the display in response to a file request.

16. The wireless terminal of claim 15, wherein the controller is configured to perform at least one of delete and put the at least one shared file according to the file request and transmit and get files.
